# EUROPÄISCHE PATENTSCHRIFT

(11) **EP 2 911 259 B1**
(45) Veröffentlichungstag und Bekanntmachung des Hinweises auf die Patenterteilung: **30.08.2017**
(21) Anmeldenummer: 14156363.5
(22) Anmeldetag: 24.02.2014
(51) Int. Cl.: H02J 3/12, H02J 3/14, H02J 3/24

(54) **Nutzung eines drehzahlgeregelten Antriebs zur Netzstabilisierung**
Use of a speed-controlled drive for network stabilisation
Utilisation d'un entraînement à régime régulé pour la stabilisation du réseau

(43) Veröffentlichungstag der Anmeldung: 26.08.2015
(73) Patentinhaber: Siemens Aktiengesellschaft, 80333 München (DE)
(72) Erfinder: Wedel, Bernd, 91096 Möhrendorf (DE); Buchstaller, Dominic, 91056 Dechsendorf (DE)

(56) Entgegenhaltungen:
- WO-A1-2014/012595
- WO-A2-2011/006828
- DE-A1-102009 003 713
- US-A1- 2004 098 171
- US-A1- 2012 226 385

## Beschreibung

Die vorliegende Erfindung betrifft ein Betriebsverfahren für eine technische Einrichtung,
- wobei die technische Einrichtung mindestens einen aus einem elektrischen Versorgungsnetz gespeisten elektrischen Antrieb aufweist,
- wobei der elektrische Antrieb auf eine Solldrehzahl geregelt wird,
- wobei der elektrische Antrieb auf eine Last wirkt, so dass dem elektrischen Antrieb aufgrund der Last mechanische Energie entzogen oder zugeführt wird,
- wobei die Last mittels der dem elektrischen Antrieb entzogenen oder zugeführten mechanischen Energie eine Nutzfunktion bewirkt.

Die vorliegende Erfindung betrifft weiterhin eine technische Einrichtung,
- wobei die technische Einrichtung mindestens einen aus einem elektrischen Versorgungsnetz gespeisten elektrischen Antrieb aufweist,
- wobei die technische Einrichtung eine Steuereinrichtung aufweist,
- wobei die Steuereinrichtung einen Drehzahlregler umfasst, mittels dessen der elektrische Antrieb auf eine Solldrehzahl geregelt wird,
- wobei die technische Einrichtung eine Last aufweist, auf die der elektrische Antrieb wirkt, so dass dem elektrischen Antrieb aufgrund der Last mechanische Energie entzogen oder zugeführt wird,
- wobei die Last mittels der dem elektrischen Antrieb entzogenen oder zugeführten mechanischen Energie eine Nutzfunktion bewirkt. Aus dem Stand der Technik ist dazu die US2004/0098171 A1, die US2012/0226385 A1, die WO 2011/006828 und die DE 10 2009 003 713 A1 bekannt.

In einem typischen öffentlichen elektrischen Versorgungsnetz gibt es einige wenige große Energiequellen (konventionelle Kraftwerke) und eine Vielzahl von Verbrauchern. Die Energiequellen werden zwar permanent nachgeregelt, um die in den Kraftwerken generierte elektrische Leistung an die von den Verbrauchern in ihrer Gesamtheit angeforderte elektrische Leistung anzupassen. Die Nachregelung der zur Verfügung gestellten elektrischen Energie ist jedoch nicht beliebig schnell möglich. Es treten daher Verzögerungszeiten auf.

Wird in den Kraftwerken kurzzeitig (d.h. innerhalb der Verzögerungszeiten) mehr elektrische Energie erzeugt als von den Verbrauchern verbraucht wird, führt dies zu einer Erhöhung der Drehzahl der Generatoren und damit zu einer Erhöhung der Netzfrequenz. Wird umgekehrt kurzzeitig weniger elektrische Energie erzeugt als von den Verbrauchern verbraucht wird, führt dies zu einer Verringerung der Drehzahl der Generatoren und damit zu einer Verringerung der Netzfrequenz. Die Generatoren - genauer: die Turbinen-Generator-Sätze - weisen jedoch eine hohe Massenträgheit (Trägheitsmoment) auf. Die Trägheitsmomente der Turbinen-Generator-Sätze wirken einer Drehzahländerung und der hiermit korrespondierenden Änderung der Netzfrequenz entgegen. Sie bewirken somit insbesondere eine automatische Netzstabilisierung.

In jüngerer Zeit werden immer mehr kleinere Energiequellen, welche der regenerativen Erzeugung elektrischer Energie dienen, an die öffentlichen elektrischen Versorgungsnetze angeschlossen. Bei diesen Energiequellen handelt es sich insbesondere um Fotovoltaik-Anlagen und Windkraftwerke. Derartige Energiequellen speisen die von ihnen generierte elektrische Energie umrichterbasiert in das öffentliche elektrische Versorgungsnetz ein. Diese Energiequellen sind - wenn überhaupt - jedoch nur in der Lage, über eine sogenannte Netzstatik-Regelung Blindleistung bereitzustellen. Eine Netzstabilisierung durch rotierende Schwungmassen kann durch diese Art von Energiequellen nicht oder nur in äußerst geringem Umfang bewirkt werden. Um dennoch das Versorgungsnetz stabil betreiben zu können, muss daher die Funktionalität "Schwungmasse" bereitgestellt werden.

Es ist denkbar, große Schwungmassen über eine umrichtergespeiste elektrische Maschine an das elektrische Versorgungsnetz anzuschließen und die Schwungmasse bei Unterlastung bzw. Überlastung des elektrischen Versorgungsnetzes zu beschleunigen bzw. zu verzögern, so dass der Betrieb des elektrischen Versorgungsnetzes stabilisiert wird. Nach Kenntnis der Anmelderin wird diese Maßnahme zur Zeit auch realisiert, und zwar dadurch, dass in einem ehemaligen Atomkraftwerk der Generator für diesen Zweck umgerüstet wird. Die Bereitstellung eigenständiger Schwungmassen verursacht jedoch zusätzliche Kosten.

Es ist weiterhin denkbar, eine Anlage der regenerativen Energieerzeugung (beispielsweise eine Fotovoltaik-Anlage) im Regelfall mit reduzierter Leistung zu betreiben, so dass durch entsprechende Korrektur der Leistungsabgabe eine Netzstabilisierung bewirkt werden kann. In diesem Fall ist die Fotovoltaik-Anlage jedoch überdimensioniert, was ebenfalls mit erhöhten Kosten verbunden ist.

Weiterhin ist es denkbar, Batteriespeichersysteme vorzusehen, welche die elektrische Energie puffern. Auch diese Maßnahme ist jedoch mit zusätzlichen Kosten verbunden.

Die Aufgabe der vorliegenden Erfindung besteht darin, Möglichkeiten zu schaffen, mittels derer bei einem elektrischen Versorgungsnetz die Funktionalität "Schwungmasse" bereitgestellt werden kann, ohne in nennenswertem Umfang zusätzliche Kosten zu verursachen.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 9.

Erfindungsgemäß wird ein Betriebsverfahren der eingangs genannten Art dadurch ausgestaltet,
- dass während des Entziehens oder Zuführens der mechanischen Energie aus dem elektrischen Antrieb und dem damit verbundenen Bewirken der Nutzfunktion der Last ein Parameter des elektrischen Versorgungsnetzes überwacht wird,
- dass der Parameter als solcher oder die zeitliche Ableitung des Parameters für eine Auslastung des elektrischen Versorgungsnetzes charakteristisch ist,
- dass die Solldrehzahl des elektrischen Antriebs in Abhängigkeit von einer Abweichung der Auslastung des elektrischen Versorgungsnetzes gemäß einer Ermittlungsvorschrift nachgeführt wird, so dass die Auslastung des elektrischen Versorgungsnetzes stabilisiert wird, und die Solldrehzahl nur zwischen einer unteren Drehzahlgrenze und einer oberen Drehzahlgrenze nachgeführt wird und dass die untere Drehzahlgrenze grösser als Null ist.

Die vorliegende Erfindung beruht somit auf dem Grundgedanken, einen Antrieb zu verwenden, der zwar innerhalb eines bestimmten Drehzahlbereichs, nicht aber bei einer genau spezifizierten Drehzahl betrieben werden muss, um die von der angetriebenen Last bewirkte Nutzfunktion zu realisieren. In diesem Fall kann innerhalb des Drehzahlbereichs die Drehzahl nach Bedarf angepasst werden, um das elektrische Versorgungsnetz zu stabilisieren.

Im Regelfall ist die Last ein Verbraucher. In einem derartigen Fall ist ein Betrieb mit derart variabler Drehzahl beispielsweise möglich, wenn die von dem elektrischen Antrieb angetriebene Last als Pumpe, als Lüfter, als Werkzeugspindel, als Werkstückspindel oder als Förderband ausgebildet ist. In Einzelfällen kann die Last jedoch auch ein Generator im weiteren Sinne sein. In diesem Fall kann die Last beispielsweise als elektrischer Generator oder als elektrische Bremse ausgebildet sein.

Im Einzelfall kann es möglich sein, dass die Solldrehzahl (kurzzeitig) auf Null abgesenkt wird. Es wird die Solldrehzahl jedoch nur zwischen einer unteren Drehzahlgrenze und einer oberen Drehzahlgrenze nachgeführt wird, wobei die untere Drehzahlgrenze größer als Null ist. Wenn eine Netzstabilisierung nur durch Unterschreiten der unteren Drehzahlgrenze oder Überschreiten der oberen Drehzahlgrenze möglich wäre, hat also die Erfüllung der Nutzfunktion der Last Vorrang vor der Netzstabilisierung.

Im einfachsten Fall sind die obere Drehzahlgrenze und die untere Drehzahlgrenze konstant. Es ist jedoch alternativ möglich, dass die obere Drehzahlgrenze und/oder die untere Drehzahlgrenze in Abhängigkeit von einem Betriebszustand der technischen Einrichtung bestimmt werden. Der Betriebszustand umfasst in diesem Fall weder die Solldrehzahl noch eine Istdrehzahl des betrachteten elektrischen Antriebs. Im Übrigen kann der Betriebszustand nach Bedarf bestimmt sein.

In der Regel ist das elektrische Versorgungsnetz ein Wechselspannungsnetz. Es ist auch in diesem Fall möglich, dass der überwachte Parameter des elektrischen Versorgungsnetzes eine Netzspannung ist. Im Regelfall führt es jedoch zu besseren und genaueren Ergebnissen, wenn der überwachte Parameter des elektrischen Versorgungsnetzes eine Grundfrequenz des Versorgungsnetzes ist.

Es ist möglich, dass die Abweichung der Auslastung des elektrischen Versorgungsnetzes eine Abweichung von einer Sollauslastung ist. Alternativ kann es sich um eine Abweichung von einem momentanen Wert der Istauslastung handeln, also um die zeitliche Änderung der Auslastung als solche.

Im einfachsten Fall ist die Ermittlungsvorschrift statisch bestimmt. Es ist jedoch alternativ möglich, dass die Ermittlungsvorschrift dynamisch bestimmt wird. Dadurch kann beispielsweise der technischen Einrichtung von außen vorgegeben werden, ob im Falle einer Abweichung der Auslastung des elektrischen Versorgungsnetzes eine Nachführung der Solldrehzahl in stärkerem oder in schwächerem Umfang vorgenommen wird.

Falls die Last ein Verbraucher ist, ist es möglich, dass der elektrische Antrieb dem elektrischen Versorgungsnetz auch in dem Fall, dass die Solldrehzahl des elektrischen Antriebs aufgrund der Abweichung der Auslastung des elektrischen Versorgungsnetzes reduziert wird, elektrische Energie entnimmt. In diesem Fall variiert also zwar der Umfang, in dem mittels des elektrischen Antriebs dem elektrischen Versorgungsnetz elektrische Energie entnommen wird. Es erfolgt jedoch jederzeit eine Entnahme elektrischer Energie. Alternativ ist es möglich, dass in dem Fall, dass die Solldrehzahl des elektrischen Antriebs aufgrund der Abweichung der Auslastung des elektrischen Versorgungsnetzes reduziert wird, der Antrieb kurzzeitig elektrische Energie in das Versorgungsnetz einspeist. Die Frage, ob der elektrische Antrieb in diesem Fall elektrische Energie in das Versorgungsnetz einspeist, kann beispielsweise von weiteren Umständen abhängen. Beispiele derartiger Umstände sind ein Betriebszustand der technischen Einrichtung oder ein Ausmaß, um welches die Solldrehzahl verringert wird oder von einer Istdrehzahl des Antriebs abweicht.

In analoger Weise ist es möglich, dass in dem Fall, dass die Last ein Generator ist, der elektrische Antrieb dem elektrischen Versorgungsnetz auch in dem Fall, dass die Solldrehzahl des elektrischen Antriebs aufgrund der Abweichung der Auslastung des elektrischen Versorgungsnetzes erhöht wird, elektrische Energie zuführt. In diesem Fall variiert also zwar der Umfang, in dem mittels des elektrischen Antriebs dem elektrischen Versorgungsnetz elektrische Energie zugeführt wird. Es erfolgt jedoch jederzeit ein Zuführen elektrischer Energie. Alternativ ist es möglich, dass in dem Fall, dass die Solldrehzahl des elektrischen Antriebs aufgrund der Abweichung der Auslastung des elektrischen Versorgungsnetzes erhöht wird, der Antrieb dem Versorgungsnetz kurzzeitig elektrische Energie entnimmt. Die Frage, ob der elektrische Antrieb in diesem Fall elektrische Energie aus dem Versorgungsnetz entnimmt, kann beispielsweise von weiteren Umständen abhängen. Beispiele derartige Umstände sind ein Betriebszustand der technischen Einrichtung oder ein Ausmaß, um welches die Solldrehzahl erhöht wird oder von einer Istdrehzahl des Antriebs abweicht.

Die Aufgabe wird weiterhin durch eine technische Anlage mit den Merkmalen des Anspruchs 10 gelöst. Vorteilhafte Ausgestaltungen der erfindungsgemäßen technischen Anlage sind Gegenstand der abhängigen Ansprüche 11 bis 18.

Erfindungsgemäß wird eine technische Anlage der eingangs genannten Art dadurch ausgestaltet, dass die Steuereinrichtung derart ausgebildet ist, dass sie während des Entziehens oder Zuführens der mechanischen Energie aus dem elektrischen Antrieb und dem damit verbundenen Bewirken der Nutzfunktion der Last einen Parameter des elektrischen Versorgungsnetzes überwacht, wobei der Parameter als solcher oder dessen zeitliche Ableitung für eine Auslastung des elektrischen Versorgungsnetzes charakteristisch ist, und die Solldrehzahl des elektrischen Antriebs in Abhängigkeit von einer Abweichung der Auslastung des elektrischen Versorgungsnetzes gemäß einer Ermittlungsvorschrift nachführt, so dass die Auslastung des elektrischen Versorgungsnetzes stabilisiert und dass die Steuereinrichtung derart ausgebildet ist, dass sie die Solldrehzahl nur zwischen einer unteren Drehzahlgrenze, die grösser als Null ist, und einer oberen Drehzahlgrenze nachführt. Die vorteilhaften Ausgestaltungen der technischen Anlage korrespondieren mit denen des Betriebsverfahrens. Es wird daher auf die obigen Ausführungen verwiesen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein elektrisches Versorgungsnetz und an das elektrische Versorgungsnetz angeschlossene Einrichtungen,
- FIG 2: einen elektrischen Verbraucher,
- FIG 3 bis 7: mögliche Lasten,
- FIG 8: ein Ablaufdiagramm,
- FIG 9 und 10: funktionale Verläufe,
- FIG 11: ein Ablaufdiagramm,
- FIG 12: einen Drehzahlstrahl,
- FIG 13: ein Ablaufdiagramm und
- FIG 14 bis 16: zeitliche Verläufe.

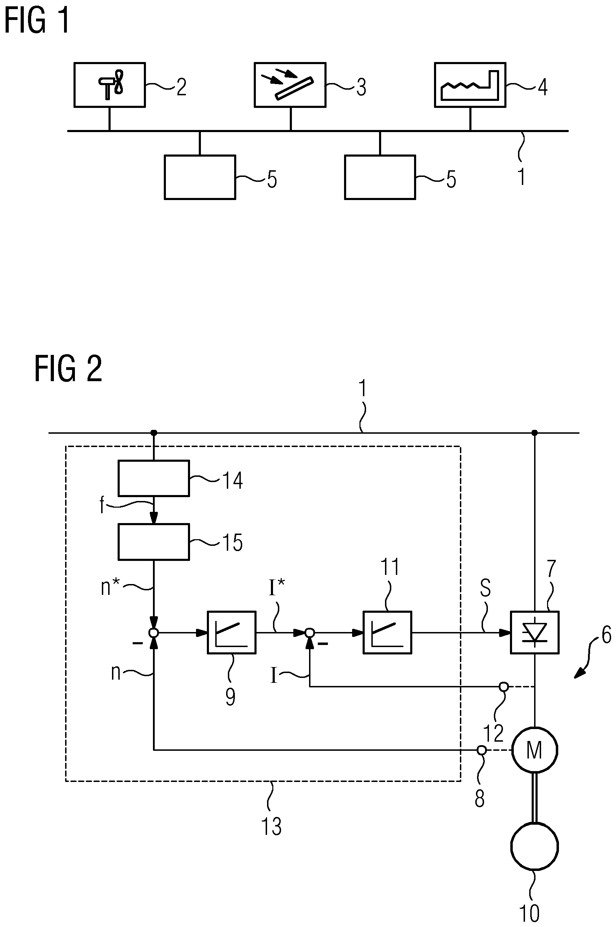

Gemäß FIG 1 können an ein elektrisches Versorgungsnetz 1 energieerzeugende Einrichtungen 2 bis 4 verschiedenster Art angeschlossen sein, beispielsweise Windkraftanlagen 2, Fotovoltaikanlagen 3 oder konventionelle Kraftwerke 4. Weiterhin können an das elektrische Versorgungsnetz 1 technische Einrichtungen 5 verschiedenster Art angeschlossen sein. Die Erzeugung elektrischer Energie durch die energieerzeugenden Einrichtungen 2 bis 4 ist Schwankungen unterworfen. Ebenso ist der Verbrauch elektrischer Energie durch die technischen Einrichtungen 5 Schwankungen unterworfen. Wenn die Erzeugung elektrischer Energie und der Verbrauch elektrischer Energie voneinander abweichen, kann es zu Netzinstabilitäten kommen. Die Vermeidung derartiger Netzinstabilitäten ist Gegenstand der vorliegenden Erfindung.

FIG 2 zeigt exemplarisch einen Aufbau einer der technischen Einrichtungen 5, wobei diese technische Einrichtung 5 zur Stabilisierung des elektrischen Versorgungsnetzes 1 beiträgt. Die technische Einrichtung 5 kann als technische Einrichtung beliebiger Art ausgebildet sein, beispielsweise als Maschine beliebiger Baugröße oder als Konglomerat vieler verschiedener Aggregate. Im Regelfall ist die technische Einrichtung 5 ein Verbraucher, der elektrische Energie verbraucht. Im Einzelfall kann es sich jedoch alternativ um einen Energieerzeuger handeln, der elektrische Energie erzeugt.

Die vorliegende Erfindung wird nachstehend mit einem Verbraucher als technische Einrichtung 5 erläutert. Die entsprechenden Modifikationen im Falle einer Ausgestaltung der technischen Einrichtung 5 als Energieerzeuger sind aus diesen Ausführungen ohne weiteres unter Berücksichtigung des angestrebten Zieles ableitbar, das Versorgungsnetz 1 zu stabilisieren. Die entsprechenden Modifikationen der Vorgehensweise sind nachfolgend teilweise in Klammern gesetzt.

Entscheidend ist im Rahmen der vorliegenden Erfindung zunächst, dass die technische Einrichtung 5 mindestens einen elektrischen Antrieb 6 aufweist, wobei dieser Antrieb 6 aus dem elektrischen Versorgungsnetz 1 gespeist wird und auf eine Solldrehzahl n* geregelt wird. Der elektrische Antrieb 6 weist also eine elektrische Maschine M auf, die über einen Stromsteller 7 - beispielsweise über einen Umrichter 7 - an das elektrische Versorgungsnetz 1 angeschlossen ist. Weiterhin ist eine Erfassungseinrichtung 8 vorhanden, mittels derer eine Istdrehzahl n des elektrischen Antriebs 5 erfasst wird. Sowohl die Solldrehzahl n* als auch die Istdrehzahl n werden einem Drehzahlregler 9 zugeführt. Mittels des Drehzahlreglers 9 wird in Abhängigkeit von der Solldrehzahl n* und der Istdrehzahl n - beispielsweise anhand der Differenz der beiden Drehzahlen n*, n - eine Stellgröße I* ermittelt, mittels derer die Istdrehzahl n der Solldrehzahl n* angenähert wird. In Abhängigkeit von der Stellgröße I* wird der Antrieb 6 angesteuert.

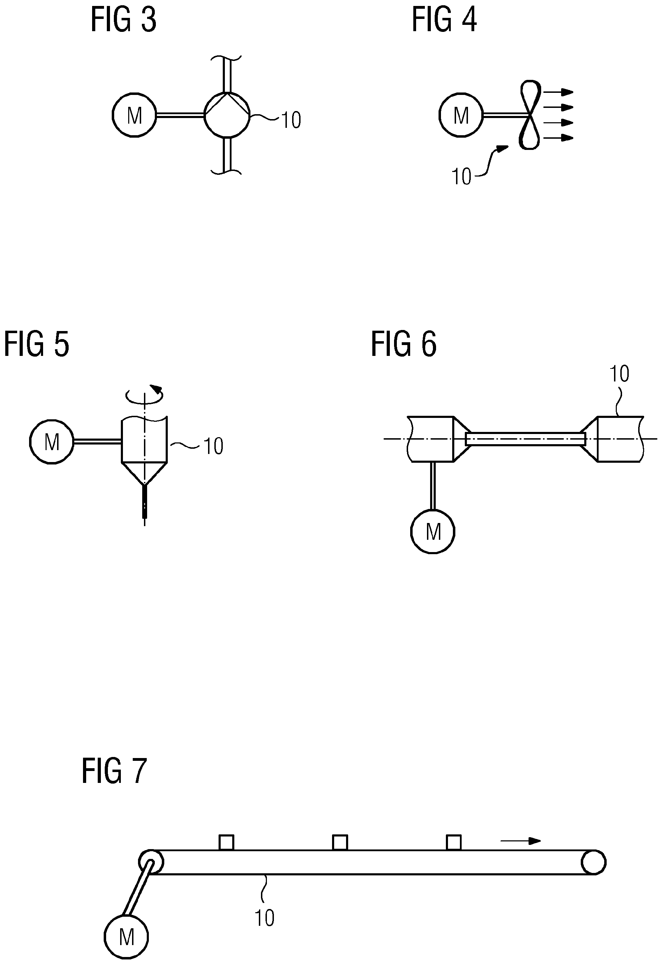

Der Antrieb 6 wirkt auf eine Last 10. Insbesondere kann der Antrieb 6 mit der Last 10 der technischen Einrichtung 5 starr gekuppelt sein, so dass eine translatorische oder rotatorische Geschwindigkeit der Last 10 direkt proportional zur Drehzahl n des Antriebs 6 ist. Die Last 10 kann beliebiger Art sein. Beispielsweise kann es sich bei der Last 10 gemäß FIG 3 um eine Pumpe handeln, mittels derer ein flüssiges oder gasförmiges Medium gepumpt wird. Alternativ kann es sich bei der Last 10 gemäß FIG 4 um einen Lüfter handeln, mittels derer eine Teileinrichtung der technischen Einrichtung 5 mit Kühlluft versorgt wird. Alternativ kann es sich bei der Last 10 gemäß FIG 5 um eine Werkzeugspindel handeln, mittels derer ein Werkstück bearbeitendes Werkzeug rotiert wird. Alternativ kann es sich bei der Last 10 gemäß FIG 6 um eine Werkstückspindel handeln, mittels derer ein Werkstück im Rahmen seiner Bearbeitung rotiert wird. Alternativ kann es sich bei der Last 10 gemäß FIG 7 um ein Förderband oder eine ähnliche Fördereinrichtung handeln, mittels derer Stückgut oder Schüttgut gefördert wird. Auch andere Ausgestaltungen der Last 10 sind möglich. Unabhängig von der konkreten Ausgestaltung der Last 10 wird dem elektrischen Antrieb 6 aufgrund der Last 10 jedoch mechanische Energie entzogen (zugeführt).

Mittels der dem elektrischen Antrieb 6 entzogenen (zugeführten) mechanischen Energie wird eine Nutzfunktion der Last 10 bewirkt. Es handelt sich bei der Nutzfunktion also nicht nur um unvermeidbare Reibungsverluste und dergleichen. Weiterhin handelt es sich bei der Nutzfunktion um eine Funktion, die durch das Rotieren des Antriebs 6 mit seiner Drehzahl n als solches bewirkt wird. Die Nutzfunktion wird von der Last 10 also unabhängig von etwaigen Drehzahländerungen des Antriebs 6 auch bei konstanter Drehzahl n bewirkt.

Zur Regelung der Drehzahl n kann beispielsweise entsprechend einer üblichen - wenn auch nicht zwingend erforderlichen - Vorgehensweise dem Drehzahlregler 9 ein Stromregler 11 unterlagert sein. In diesem Fall ist die Stellgröße I* ein Sollstrom, der dem Stromregler 11 zugeführt wird. In diesem Fall ist weiterhin zusätzlich ein Stromsensor 12 vorhanden, mittels dessen ein Iststrom I des elektrischen Antriebs 6 erfasst wird. Der Stromregler 11 ermittelt in diesem Fall in Abhängigkeit von dem Sollstrom I* und dem Iststrom I - beispielsweise anhand der Differenz der beiden Ströme I*, I - eine Steuergröße S, mittels derer der Stromsteller 7 gesteuert wird.

Der Drehzahlregler 9 und gegebenenfalls auch der Stromregler 11 sind Bestandteil einer Steuereinrichtung 13 der technischen Einrichtung 5. Die Steuereinrichtung 13 umfasst weitere Komponenten 14, 15, auf die nachstehend näher eingegangen wird.

Insbesondere umfasst die Steuereinrichtung 13 einen Netzsensor 14. Der Netzsensor 14 ist an das elektrische Versorgungsnetz 1 angekoppelt. Mittels des Netzsensors 14 überwacht die Steuereinrichtung einen Parameter f des elektrischen Versorgungsnetzes 1. Der Parameter f ist derart bestimmt, dass entweder der Parameter f als solcher oder die zeitliche Ableitung des Parameters f für eine Auslastung des elektrischen Versorgungsnetzes 1 charakteristisch ist. Hierbei ist es ausreichend, wenn anhand des Parameters f bzw. dessen zeitlicher Ableitung erkennbar ist, ob das elektrische Versorgungsnetz 1 korrekt ausgelastet oder überlastet oder unterlastet ist. Es ist jedoch alternativ möglich, dass der Parameter f bzw. dessen zeitliche Ableitung zusätzlich ein mehr oder minder fein gequanteltes Maß für die Über- bzw. Unterlastung des elektrischen Versorgungsnetzes 1 liefern.

Beispielsweise kann es sich bei dem Parameter f um eine Istspannung des elektrischen Versorgungsnetzes 1 handeln. In dem üblichen Fall, dass das elektrische Versorgungsnetz 1 ein - ein- oder mehrphasiges - Wechselspannungsnetz ist, handelt es sich bei dem Parameter f vorzugsweise um eine Grundfrequenz des Versorgungsnetzes 1. Unabhängig davon, um welchen Parameter es sich konkret handelt, erfolgt die Überwachung des elektrischen Versorgungsnetzes 1 jedoch im Normalbetrieb der technischen Einrichtung 5 und damit insbesondere während des Entziehens der mechanischen Energie aus dem elektrischen Antrieb 6 (bzw. Zuführens der mechanischen Energie zu dem elektrischen Antrieb 6) und dem damit verbundenen Bewirken der Nutzfunktion der Last 10 durch die Last 10.

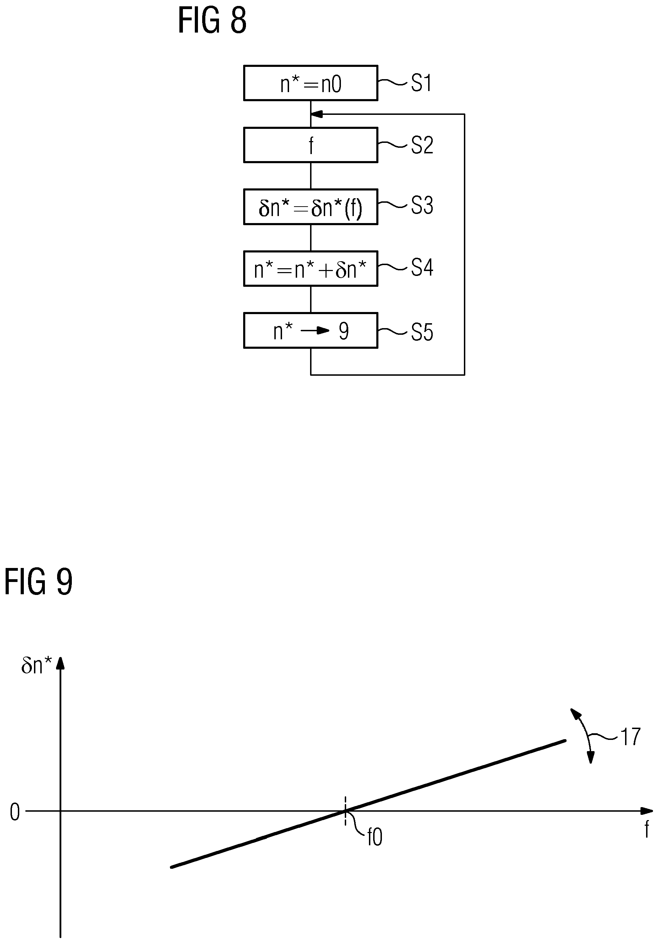

Die Steuereinrichtung 13 weist weiterhin einen Sollwertermittler 15 auf. Dem Sollwertermittler 15 wird vom Netzsensor 14 der überwachte Parameter f des Versorgungsnetzes 1 zugeführt. Der Sollwertermittler 15 ermittelt die Solldrehzahl n* für den Drehzahlregler 9. Insbesondere führt der Sollwertermittler 15 die Solldrehzahl n* des elektrischen Antriebs 6 in Abhängigkeit von einer Abweichung der Auslastung des elektrischen Versorgungsnetz S1 gemäß einer Ermittlungsvorschrift nach. Die Ermittlung erfolgt primär zwar gemäß den Erfordernissen des technischen Prozesses, der durch die technische Einrichtung 5 realisiert werden soll. Ergänzend wird bei der Ermittlung der Solldrehzahl n* jedoch berücksichtigt, dass die Auslastung des elektrischen Versorgungsnetzes 1 stabilisiert werden soll. Auf die Ermittlung der Solldrehzahl n* gemäß den Erfordernissen des technischen Prozesses wird nachstehend nicht näher eingegangen. Die Vorgehensweise zur Stabilisierung des elektrischen Versorgungsnetzes 1 jedoch wird nachfolgend in Verbindung mit den FIG 8 bis 10 näher erläutert.

Gemäß FIG 8 setzt der Sollwertermittler 15 in einem Schritt S1 die Solldrehzahl n* auf einen Anfangswert n0. In einem Schritt S2 nimmt der Sollwertermittler 15 vom Netzsensor 14 den Parameter f entgegen. In einem Schritt S3 ermittelt der Sollwertermittler 15 anhand der Abweichung δf des Parameters f einen Änderungswert δn* für die Solldrehzahl n*. In einem Schritt S4 ermittelt der Sollwertermittler 15 die neue Solldrehzahl n*. Insbesondere addiert der Sollwertermittler 15 den Änderungswert δn* zur bisher gültigen Solldrehzahl n* hinzu. Die neue Solldrehzahl n* führt der Sollwertermittler 15 in einem Schritt S5 dem Drehzahlregler 9 zu. Sodann geht der Sollwertermittler 15 zum Schritt S2 zurück.

Der Drehzahlregler 9 führt anhand der ihm jeweils aktuell vorgegebenen Solldrehzahl n* eine Drehzahlregelung durch. Die Drehzahlregelung durch den Drehzahlregler 9 ist jedoch zeitlich entkoppelt von der Ausführung der Schritte S2 bis S5 durch den Sollwertermittler 15.

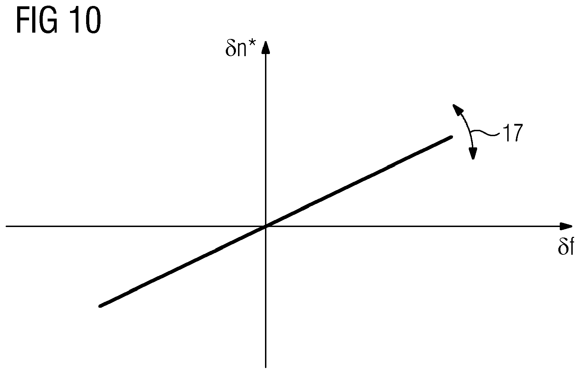

Es ist möglich, dass der Sollwertermittler 15 im Rahmen des Schrittes S3 den Änderungswert δn* anhand einer Abweichung des Parameters f von einem Standardwert f0 ermittelt. Dieser Fall ist in FIG 9 dargestellt. Vorzugsweise ermittelt der Sollwertermittler 15 im Rahmen des Schrittes S3 den Änderungswert δn* jedoch anhand einer Abweichung des Parameters f von einem momentanen Wert des Parameters f, also anhand von dessen zeitlicher Änderung df/dt als solcher. Dieser Fall ist in FIG 10 dargestellt.

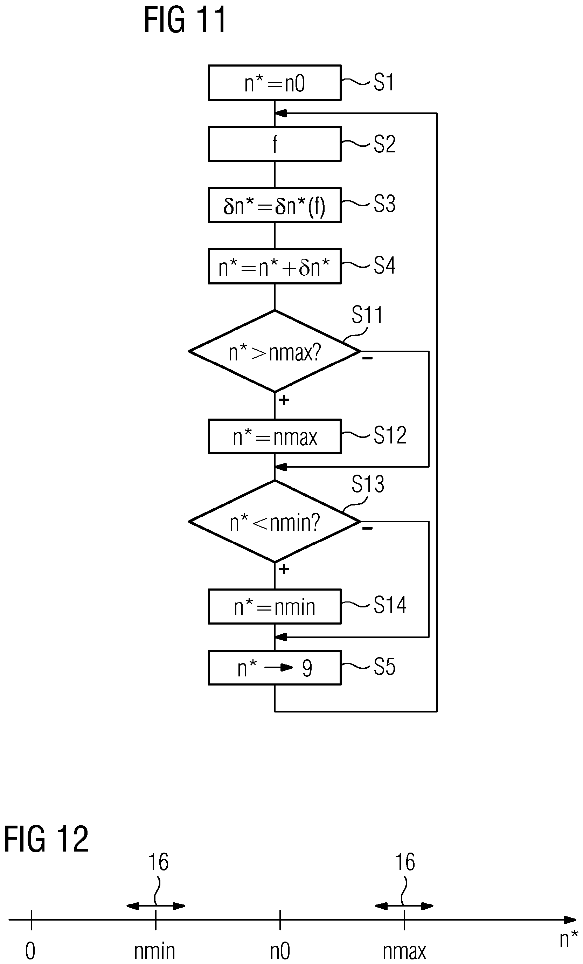

Die Last 10 bewirkt, wie bereits erwähnt, eine Nutzfunktion, wobei diese Nutzfunktion auch bei konstanter Drehzahl n des Antriebs 6 bewirkt wird. Damit wird auch die Nutzfunktion nicht bewirkt, wenn der Antrieb 6 steht, dessen Drehzahl n also 0 ist. Vorzugsweise wird die Solldrehzahl n* vom Sollwertermittler 15 daher nur zwischen einer unteren Drehzahlgrenze nmin und einer oberen Drehzahlgrenze nmax nachgeführt, wobei insbesondere die untere Drehzahlgrenze nmin größer als Null ist. Dies wird nachstehend in Verbindung mit den FIG 11 und 12 näher erläutert.

FIG 11 zeigt die Vorgehensweise, mittels derer die Nachführung der Solldrehzahl n* nur zwischen der unteren Drehzahlgrenze nmin und der oberen Drehzahlgrenze nmax bewirkt wird. FIG 11 stellt eine Modifikation der Vorgehensweise von FIG 8 dar. Insbesondere enthält auch FIG 11 die Schritte S1 bis S5 von FIG 8. Zusätzlich sind jedoch zwischen dem Schritt S4 und dem Schritt S5 weitere Schritte S11 bis S14 vorhanden. Nachfolgend werden die Schritte S11 bis S14 erläutert.

Im Schritt S11 prüft der Sollwertermittler 15, ob die neu ermittelte Solldrehzahl n* größer als die obere Drehzahlgrenze nmax ist. Wenn dies der Fall ist, wird die neu ermittelte Solldrehzahl n* im Schritt S12 auf die obere Drehzahlgrenze nmax begrenzt. Anderenfalls wird der Schritt S12 übersprungen. In analoger Weise prüft der Sollwertermittler 15 im Schritt S13, ob die neu ermittelte Solldrehzahl n* kleiner als die untere Drehzahlgrenze nmin ist. Wenn dies der Fall ist, wird die neu ermittelte Solldrehzahl n* im Schritt S14 auf die untere Drehzahlgrenze nmin begrenzt. Anderenfalls wird der Schritt S14 übersprungen. Durch diese Vorgehensweise wird somit stets gewährleistet, dass die tatsächliche Solldrehzahl gemäß FIG 12 stets zwischen den beiden Drehzahlgrenzen nim und nmax liegt. Durch die Begrenzung der Solldrehzahl n* nach oben und unten können insbesondere die Erfordernisse des technischen Prozesses berücksichtigt werden, der durch die technische Einrichtung 5 realisiert werden soll.

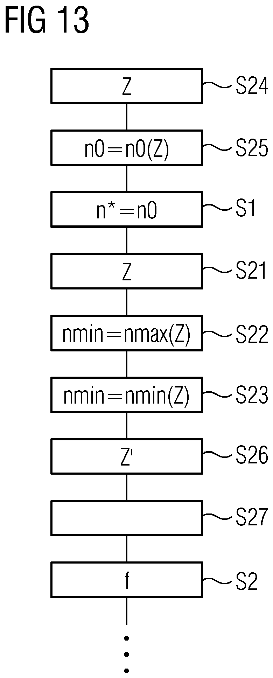

Es ist möglich, dass die obere Drehzahlgrenze nmax und die untere Drehzahlgrenze nmin Konstanten sind. Alternativ können die obere Drehzahlgrenze nmax und/oder die untere Drehzahlgrenze nmin, wie in FIG 4 durch Doppelpfeile 16 angedeutet ist, zeitlich variabel sein. In diesem Fall bestimmt der Sollwertermittler 15 die obere Drehzahlgrenze nmax und/oder die untere Drehzahlgrenze nmin in Abhängigkeit von einem Betriebszustand Z der technischen Einrichtung 5. Der Betriebszustand Z kann nach Bedarf bestimmt sein. Er ist jedoch unabhängig von der Istdrehzahl n und der Solldrehzahl n* des Antriebs 6. Die entsprechende Vorgehensweise wird nachstehend in Verbindung mit FIG 13 näher erläutert.

Gemäß FIG 13 ist die Vorgehensweise von FIG 11 dahingehend modifiziert, dass zusätzlich zu den Schritten S1 bis S5 sowie S11 bis S14 Schritte S21 bis S23, eventuell zusätzlich auch Schritte S24 und S25 und/oder Schritte S26 und S27, vorhanden sind.

Im Schritt S21 nimmt der Sollwertermittler 15 den Betriebszustand Z der technischen Einrichtung 5 entgegen. Im Schritt S22 ermittelt der Sollwertermittler 15 in Abhängigkeit von dem Betriebszustand Z die obere Drehzahlgrenze nmax. Im Schritt S23 ermittelt der Sollwertermittler 15 in Abhängigkeit von dem Betriebszustand Z die untere Drehzahlgrenze nmin.

Der Schritt S22 ist den Schritten S11 und S12 vorgeordnet. In analoger Weise ist der Schritt S23 den Schritten S13 und S14 vorgeordnet. Der Schritt S21 ist den Schritten S22 und S23 vorgeordnet. Die Schritte S21 bis S23 können beispielsweise entsprechend der Darstellung in FIG 13 dem Schritt S2 vorgeordnet sein.

Falls die Schritte S24 und S25 vorhanden sind, sind sie dem Schritt S1 vorgeordnet. Im Schritt S24 nimmt der Sollwertermittler 15 - analog zum Schritt S21 - den Betriebszustand Z der technischen Einrichtung 5 entgegen. Im Schritt S25 ermittelt der Sollwertermittler 15 in Abhängigkeit von dem Betriebszustand Z den Anfangswert n0 für die Solldrehzahl n*. In diesem Fall ist also auch der Anfangswert n0 für die Solldrehzahl n* vom Betriebszustand Z der technischen Einrichtung 5 abhängig.

Falls die Schritte S26 und S27 vorhanden sind, sind sie dem Schritt S3 vorgeordnet. Die Schritte S26 und S27 können beispielsweise entsprechend der Darstellung in FIG 13 analog zu den Schritten S21 bis S23 ebenfalls dem Schritt S2 vorgeordnet sein. Im Schritt S26 nimmt der Sollwertermittler 15 einen Betriebszustand Z' des Versorgungsnetzes 1 entgegen. Im Schritt S27 bestimmt der Sollwertermittler 15 in Abhängigkeit von dem Betriebszustand Z' des Versorgungsnetzes 1 dynamisch die Ermittlungsvorschrift, anhand derer bei einer Abweichung δf der Auslastung des Versorgungsnetzes 1 der Änderungswert δn* ermittelt wird. Beispielsweise kann, wie in den FIG 9 und 10 durch Doppelpfeile 17 angedeutet ist, eine Anpassung einer Steigung und damit eines Umrechnungsfaktors von der Abweichung δf in den Änderungswert δn* erfolgen.

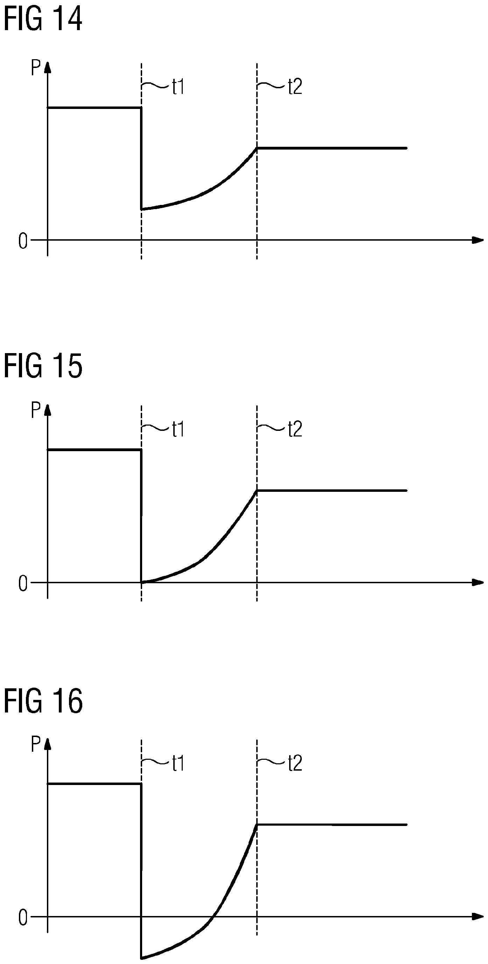

Wie bereits erwähnt, entzieht die Last 10 dem elektrischen Antrieb 6 auch bei konstanter Drehzahl n des elektrischen Antriebs 6 mechanische Energie bzw. führt ihm mechanische Energie zu. Eine dem elektrischen Antrieb 6 aus dem elektrischen Versorgungsnetz 1 zugeführte (entnommene) elektrische Leistung P ist daher im stabilen Zustand des Versorgungsnetzes 1 größer als 0. Dieser Zustand ist in den FIG 14 bis 16 links eines Zeitpunkts t1 dargestellt.

Wenn zum Zeitpunkt t1 ein Ansteigen der Auslastung des Versorgungsnetzes 1 erkannt wird - beispielsweise weil die Grundfrequenz f des Versorgungsnetzes 1 absinkt -, wird die Solldrehzahl n* vom Sollwertermittler 15 nachgeführt, in diesem Fall (Energieentnahme) verringert. Während der Verringerung der Drehzahl n - also im Zeitraum zwischen dem Zeitpunkt t1 und einem weiteren Zeitpunkt t2 - entnimmt der elektrische Antrieb 6 dem Versorgungsnetz 1 eine geringere elektrische Leistung P. Nachdem die Drehzahl n zum Zeitpunkt t2 ihren neuen Wert angenommen hat, stabilisiert sich die dem Versorgungsnetz 1 entnommene elektrische Leistung P auf einem neuen Wert, der in der Regel unterhalb des vorherigen Wertes liegt.

Das Ausmaß, in dem sich die dem elektrischen Versorgungsnetz 1 vom elektrischen Antrieb 6 entnommene Leistung P in dem Zeitraum zwischen den Zeitpunkten t1 und t2 verringert, kann unterschiedlich sein. So ist es beispielsweise möglich, dass der elektrische Antrieb 6 dem elektrischen Versorgungsnetz 1 auch in dem Fall, dass die Solldrehzahl n* reduziert wird, - also in dem Zeitraum zwischen den Zeitpunkten t1 und t2 - stets elektrische Energie entnimmt, die entsprechende elektrische Leistung P gemäß der Darstellung in FIG 14 also stets größer als Null bleibt. Alternativ ist es möglich, dass die entsprechende elektrische Leistung P gemäß der Darstellung in FIG 15 zwar zumindest zeitweise bis auf Null absinken kann, aber keine negativen Werte annehmen kann. Wiederum alternativ ist es möglich, dass die entsprechende elektrische Leistung P gemäß der Darstellung in FIG 16 auf Werte unter Null sinken kann. In diesem Fall kann es also geschehen, dass der elektrische Antrieb 6 temporär elektrische Energie in das elektrische Versorgungsnetz 1 einspeist, der elektrische Antrieb 6 und der Umrichter 7 also rückspeisefähig sind.

Analoge Vorgehensweisen sind auch im umgekehrten Fall möglich, dass der elektrische Antrieb 6 dem Versorgungsnetz 1 elektrische Leistung P zuführt.

Zusammengefasst betrifft die vorliegende Erfindung somit folgenden Sachverhalt:
Eine technische Einrichtung 5 weist mindestens einen elektrischen Antrieb 6 auf, der aus einem elektrischen Versorgungsnetz 1 gespeist wird. Der elektrische Antrieb 6 wird auf eine Solldrehzahl n* geregelt. Der elektrische Antrieb 6 wirkt auf eine Last 10, so dass dem elektrischen Antrieb 6 aufgrund der Last 10 mechanische Energie entzogen oder zugeführt wird. Die Last bewirkt mittels der dem elektrischen Antrieb 6 entzogenen bzw. zugeführten mechanischen Energie eine Nutzfunktion. Während des Entziehens bzw. Zuführens der mechanischen Energie aus dem elektrischen Antrieb 6 und dem damit verbundenen Bewirken der Nutzfunktion der Last 10 wird ein Parameter f des elektrischen Versorgungsnetzes 1 überwacht. Der Parameter f als solcher oder die zeitliche Ableitung des Parameters f ist für eine Auslastung des elektrischen Versorgungsnetzes 1 charakteristisch. Die Solldrehzahl n* des elektrischen Antriebs 6 wird in Abhängigkeit von einer Abweichung der Auslastung des elektrischen Versorgungsnetzes 1 gemäß einer Ermittlungsvorschrift nachgeführt, so dass die Auslastung des elektrischen Versorgungsnetzes 1 stabilisiert wird.

Die vorliegende Erfindung weist viele Vorteile auf. Insbesondere kann für das elektrische Versorgungsnetz 1 auf nahezu kostenneutrale Weise die Funktionalität "Schwungmasse" bereitgestellt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine technische Einrichtung (5),
- wobei die technische Einrichtung (5) mindestens einen aus einem elektrischen Versorgungsnetz (1) gespeisten elektrischen Antrieb (6) aufweist,
- wobei der elektrische Antrieb (6) auf eine Solldrehzahl (n*) geregelt wird,
- wobei der elektrische Antrieb (6) auf eine Last (10) wirkt, so dass dem elektrischen Antrieb (6) aufgrund der Last (10) mechanische Energie entzogen oder zugeführt wird,
- wobei die Last (10) mittels der dem elektrischen Antrieb (6) entzogenen oder zugeführten mechanischen Energie eine Nutzfunktion bewirkt,
**dadurch gekennzeichnet,**
- **dass** während des Entziehens oder Zuführens der mechanischen Energie aus dem elektrischen Antrieb (6) und dem damit verbundenen Bewirken der Nutzfunktion der Last (10) ein Parameter (f) des elektrischen Versorgungsnetzes (1) überwacht wird,
- **dass** der Parameter (f) als solcher oder eine zeitliche Ableitung des Parameters (f) für eine Auslastung des elektrischen Versorgungsnetzes (1) charakteristisch ist,
- **dass** die Solldrehzahl (n*) des elektrischen Antriebs (6) in Abhängigkeit von einer Abweichung der Auslastung des elektrischen Versorgungsnetzes (1) gemäß einer Ermittlungsvorschrift nachgeführt wird, so dass die Auslastung des elektrischen Versorgungsnetzes (1) stabilisiert wird, und
- die Solldrehzahl (n*) nur zwischen einer unteren Drehzahlgrenze (nmin) und einer oberen Drehzahlgrenze (nmax) nachgeführt wird und dass die untere Drehzahlgrenze (nmin) größer als Null ist

2. Betriebsverfahren nach Anspruch 1, **dadurch gekennzeichnet, dass** die obere Drehzahlgrenze (nmax) und/oder die untere Drehzahlgrenze (nmin) in Abhängigkeit von einem Betriebszustand (Z) der technischen Einrichtung (5) bestimmt werden.

3. Betriebsverfahren nach Anspruch 1, oder 2, **dadurch gekennzeichnet , dass** das elektrische Versorgungsnetz (1) ein Wechselspannungsnetz ist und dass der überwachte Parameter (f) des elektrischen Versorgungsnetzes (1) eine Grundfrequenz (f) des Versorgungsnetzes (1) ist.

4. Betriebsverfahren nach einem der obigen Ansprüche, **dadurch gekennzeichnet, dass** die Abweichung der Auslastung des elektrischen Versorgungsnetzes (1) eine Abweichung von einer Sollauslastung oder eine Abweichung von einem momentanen Wert der Istauslastung ist.

5. Betriebsverfahren nach einem der obigen Ansprüche, **dadurch gekennzeichnet, dass** die Ermittlungsvorschrift dynamisch bestimmt wird.

6. Betriebsverfahren nach einem der obigen Ansprüche, **dadurch gekennzeichnet , dass** die von dem elektrischen Antrieb (6) angetriebene Last (10) als Pumpe, als Lüfter, als Werkzeugspindel, als Werkstückspindel oder als Förderband ausgebildet ist.

7. Betriebsverfahren nach einem der Ansprüche 1 bis 6, **dadurch gekennzeichnet , dass** der elektrische Antrieb (6) dem elektrischen Versorgungsnetz (1) auch in dem Fall, dass die Solldrehzahl (n*) des elektrischen Antriebs (6) aufgrund der Abweichung der Auslastung des elektrischen Versorgungsnetzes (1) reduziert wird, elektrische Energie entnimmt oder zuführt.

8. Betriebsverfahren nach einem der Ansprüche 1 bis 6, **dadurch gekennzeichnet, dass** in dem Fall, dass die Solldrehzahl (n*) des elektrischen Antriebs (6) aufgrund der Abweichung der Auslastung des elektrischen Versorgungsnetzes (1) reduziert wird, der Antrieb (6) kurzzeitig elektrische Energie in das Versorgungsnetz (1) einspeist oder aus dem Versorgungsnetz (1) entnimmt.

9. Technische Einrichtung,
- wobei die technische Einrichtung mindestens einen aus einem elektrischen Versorgungsnetz (1) gespeisten elektrischen Antrieb (6) aufweist,
- wobei die technische Einrichtung eine Steuereinrichtung (13) aufweist,
- wobei die Steuereinrichtung (13) einen Drehzahlregler (9) umfasst, mittels dessen der elektrische Antrieb (6) auf eine Solldrehzahl (n*) geregelt wird,
- wobei die technische Einrichtung eine Last (10) aufweist, auf die der elektrische Antrieb (6) wirkt, so dass dem elektrischen Antrieb (6) aufgrund der Last (10) mechanische Energie entzogen oder zugeführt wird,
- wobei die Last (10) mittels der dem elektrischen Antrieb (6) entzogenen oder zugeführten mechanischen Energie eine Nutzfunktion bewirkt,
**dadurch gekennzeichnet,**
**dass** die Steuereinrichtung (13) derart ausgebildet ist, dass sie während des Entziehens oder Zuführens der mechanischen Energie aus dem elektrischen Antrieb (6) und dem damit verbundenen Bewirken der Nutzfunktion der Last (10) einen Parameter (f) des elektrischen Versorgungsnetzes (1) überwacht, der als solcher oder dessen zeitliche Ableitung für eine Auslastung des elektrischen Versorgungsnetzes (1) charakteristisch ist, und die Solldrehzahl (n*) des elektrischen Antriebs (6) in Abhängigkeit von einer Abweichung der Auslastung des elektrischen Versorgungsnetzes (1) gemäß einer Ermittlungsvorschrift nachführt, so dass die Auslastung des elektrischen Versorgungsnetzes (1) stabilisiert wird, und dass die Steuereinrichtung (13) derart ausgebildet ist, dass sie die Solldrehzahl (n*) nur zwischen einer unteren Drehzahlgrenze (nmin), die größer als Null ist, und einer oberen Drehzahlgrenze (nmax) nachführt.

10. Technische Einrichtung nach Anspruch 9, **dadurch gekennzeichnet, dass** die Steuereinrichtung (13) derart ausgebildet ist, dass sie die obere Drehzahlgrenze (nmax) und/oder die untere Drehzahlgrenze (nmin) in Abhängigkeit von einem Betriebszustand (Z) der technischen Einrichtung bestimmt.

11. Technische Einrichtung nach Anspruch 9 oder 10, **dadurch gekennzeichnet, dass** das elektrische Versorgungsnetz (1) ein Wechselspannungsnetz ist und dass der überwachte Parameter (f) des elektrischen Versorgungsnetzes (1) eine Grundfrequenz (f) des Versorgungsnetzes (1) ist.

12. Technische Einrichtung nach einem der Ansprüche 9 bis 11, **dadurch gekennzeichnet, dass** die Steuereinrichtung (13) derart ausgebildet ist, dass sie die Abweichung der Auslastung des elektrischen Versorgungsnetzes (1) als Abweichung von einer Sollauslastung oder als Abweichung von einem momentanen Wert der Istauslastung verwendet.

13. Technische Einrichtung nach einem der Ansprüche 9 bis 12, **dadurch gekennzeichnet, dass** die Steuereinrichtung (13) derart ausgebildet ist, dass sie die Ermittlungsvorschrift dynamisch bestimmt.

14. Technische Einrichtung nach einem der Ansprüche 9 bis 13, **dadurch gekennzeichnet, dass** die von dem elektrischen Antrieb (6) angetriebene Last (10) als Pumpe, als Lüfter, als Werkzeugspindel, als Werkstückspindel oder als Förderband ausgebildet ist.

15. Technische Einrichtung nach einem der Ansprüche 9 bis 14, **dadurch gekennzeichnet, dass** der elektrische Antrieb (6) dem elektrischen Versorgungsnetz (1) auch in dem Fall, dass die Solldrehzahl (n*) des elektrischen Antriebs (6) aufgrund der Abweichung der Auslastung des elektrischen Versorgungsnetzes (1) reduziert wird, elektrische Energie entnimmt oder zuführt.

16. Technische Einrichtung nach einem der Ansprüche 9 bis 14, **dadurch gekennzeichnet, dass** in dem Fall, dass die Solldrehzahl (n*) des elektrischen Antriebs (6) aufgrund der Abweichung der Auslastung des elektrischen Versorgungsnetzes (1) reduziert wird, der Antrieb (6) kurzzeitig elektrische Energie in das Versorgungsnetz (1) einspeist oder aus dem Versorgungsnetz (1) entnimmt.

## Claims

1. Operating method for a technical device (5),
- wherein the technical device (5) has at least one electric drive (6) fed from an electrical supply network (1),
- wherein the electric drive (6) is regulated to a set rotation speed (n*),
- wherein the electric drive (6) acts on a load (10) so that mechanical energy is removed from or supplied to the electric drive (6) on account of the load (10),
- wherein the load (10) brings about a useful function by means of the mechanical energy removed from or supplied to the electric drive (6),
**characterised in that**
- during the removal or supply of mechanical energy from/to the electric drive (6) and the effects of the useful function of the load (10) associated therewith, a parameter (f) of the electrical supply network (1) is monitored,
- the parameter (f) as such or a temporal derivation of the parameter (f) is characteristic of a utilisation of the electrical supply network (1),
- the set rotation speed (n*) of the electric drive (6) is tracked according to a determination provision as a function of a variation in the utilisation of the electrical supply network (1) so that the utilisation of the electrical supply network (1) is stabilised, and
- the set rotation speed (n*) is only tracked between a lower rotation speed limit (nmin) and an upper rotation speed limit (nmax) and that the lower rotation speed limit (nmin) is greater than zero.

2. Operating method according to claim 1, **characterised in that** the upper rotation speed limit (nmax) and/or the lower rotation speed limit (nmin) are determined as a function of an operating state (Z) of the technical device (5).

3. Operating method according to claim 1, or 2, **characterised in that** the electrical supply network (1) is an alternating voltage network and that the monitored parameter (f) of the electrical supply network (1) is a basic frequency (f) of the supply network (1).

4. Operating method according to one of the above claims, **characterised in that** the variation in the utilisation of the electrical supply network (1) is a variation from a set utilisation or a variation from a momentary value of the actual utilisation.

5. Operating method according to one of the above claims, **characterised in that** the determination provision is determined dynamically.

6. Operating method according to one of the above claims, **characterised in that** the load (10) driven by the electric drive (6) is embodied as a pump, as a fan, as a tool spindle, as a workpiece spindle or as a conveyor.

7. Operating method according to one of claims 1 to 6, **characterised in that** the electric drive (6) removes or supplies electrical energy from/to the electrical supply network (1) even if the set rotation speed (n*) of the electric drive (6) is reduced on account of the variation in utilisation of the electrical supply network (1).

8. Operating method according to one of claims 1 to 6, **characterised in that** in the event that the set rotation speed (n*) of the electric drive (6) is reduced on account of the variation in the utilisation of the electrical supply network (1), the drive (6) briefly feeds electrical energy into the supply network (1) or removes electrical energy from the supply network (1).

9. Technical device,
- wherein the technical device has at least one electric drive (6) fed from an electrical supply network (1),
- wherein the technical device has a control device (13),
- wherein the control device (13) comprises a rotational speed controller (9), by means of which the electric drive (6) is regulated to a set rotation speed (n*),
- wherein the technical device has a load (10), on which the electric drive (6) acts, so that on account of the load (10) mechanical energy is removed from or supplied to the electric drive (6),
- wherein the load (10) brings about a useful function by means of the mechanical energy removed from or supplied to the electric drive (6),
**characterised in that**
the control device (13) is embodied such that during the removal or supply of mechanical energy from/to the electric drive (6) and the effect of the useful function of the load (10) associated therewith, it monitors a parameter (f) of the electrical supply network (1) which, as such or its temporal derivation, is characteristic of a utilisation of the electrical supply network (1), and the set rotation speed (n*) of the electric drive (6) is tracked as a function of a variation in the utilisation of the electrical supply network (1) according to a determination provision, so that the utilisation of the electrical supply network (1) is stabilised and that the control device (13) is embodied such that it tracks the set rotation speed (n*) only between a lower rotation speed limit (nmin), which is greater than zero, and an upper rotation speed limit (nmax).

10. Technical device according to claim 9, **characterised in that** the control device (13) is embodied such that it determines the upper rotation speed limit (nmax) and/or the lower rotation speed limit (nmin) as a function of an operating state (Z) of the technical device.

11. Technical device according to claim 9 or 10, **characterised in that** the electrical supply network (1) is an alternating voltage network and that the monitored parameter (f) of the electrical supply network (1) is a basic frequency (f) of the supply network (1).

12. Technical device according to one of claims 9 to 11, **characterised in that** the control device (13) is embodied such that it uses the variation in the utilisation of the electrical supply network (1) as a variation from a set utilisation or as variation from a momentary value of the actual utilisation.

13. Technical device according to one of claims 9 to 12, **characterised in that** the control device (13) is embodied such that it determines the determination provision dynamically.

14. Technical device according to one of claims 9 to 13, **characterised in that** the load (10) driven by the electric drive (6) is embodied as a pump, as a fan, as a tool spindle, as a workpiece spindle or as a conveyor.

15. Technical device according to one of claims 9 to 14, **characterised in that** the electric drive (6) removes or supplies electrical energy from/to the electrical supply network (1) even if the set rotation speed (n*) of the electric drive (6) is reduced on account of the variation in the utilisation of the electrical supply network (1).

16. Technical device according to one of claims 9 to 14, **characterised in that** in the event that the set rotation speed (n*) of the electric drive (6) is reduced on account of the variation in the utilisation of the electrical supply network (1), the drive (6) briefly feeds electrical energy into the supply network (1) or removes the same from the supply network (1) .

## Revendications

1. Procédé pour faire fonctionner un dispositif (5) technique,
- dans lequel le dispositif (5) technique a au moins un entraînement (6) électrique alimenté à partir d'un réseau (1) d'alimentation électrique,
- dans lequel on régule l'entraînement (6) électrique à un régime (n*) de consigne,
- dans lequel l'entraînement (6) électrique agit sur une charge (10), de sorte qu'il est retiré de l'énergie mécanique de l'entraînement (6) électrique en raison de la charge (10) ou qu'il lui en est apporté,
- dans lequel la charge (10) effectue une fonction utile au moyen de l'énergie mécanique retirée de l'entraînement (6) électrique ou apportée,
**caractérisé en ce que**
- pendant le retrait ou l'apport de l'énergie mécanique de l'entraînement (6) électrique et la réalisation qui s'ensuit de la fonction utile de la charge (10), on contrôle un paramètre (f) du réseau (1) d'alimentation électrique,
- **en ce que** le paramètre (f) est, en tant que tel, ou sous la forme d'une dérivée en fonction du temps du paramètre (f), caractéristique d'un délestage du réseau (1) d'alimentation électrique,
- **en ce que** l'on suit, suivant une prescription de détermination, le régime (n*) de consigne de l'entraînement (6) électrique, en fonction d'un écart du délestage du réseau (1) d'alimentation électrique, de manière à stabiliser le délestage du réseau (1) d'alimentation électrique et
- on ne suit le régime (n*) de consigne qu'entre une limite (nmin) inférieure de régime et une limite (nmax) supérieure de régime et **en ce que** la limite (nmin) inférieure de régime est plus grande que zéro.

2. Procédé suivant la revendication 1, **caractérisé en ce que** l'on détermine la limite (nmax) supérieure de régime et/ou la limite (nmin) inférieure de régime en fonction d'un état (Z) de fonctionnement du dispositif (5) technique.

3. Procédé suivant la revendication 1 ou 2, **caractérisé en ce que** le réseau (1) d'alimentation électrique est un réseau à tension alternative et **en ce que** le paramètre (f) contrôlé du réseau (1) d'alimentation électrique est une fréquence (f) fondamentale du réseau (1) d'alimentation.

4. Procédé suivant l'une des revendications précédentes, **caractérisé en ce que** l'écart du délestage du réseau (1) d'alimentation électrique est un écart à un délestage de consigne ou un écart à une valeur instantanée du délestage réel.

5. Procédé suivant l'une des revendications précédentes, **caractérisé en ce que** l'on détermine dynamiquement la prescription de détermination.

6. Procédé suivant l'une des revendications précédentes, **caractérisé en ce que** la charge (10), entraînée par l'entraînement (6) électrique, est constituée sous la forme d'une pompe, d'un ventilateur, d'une broche porte-outil, d'une broche porte-pièce ou d'une bande convoyeuse.

7. Procédé suivant l'une des revendications 1 à 6, **caractérisé en ce que** l'entraînement (6) électrique retire ou apporte de l'énergie électrique au réseau (1) d'alimentation électrique, également dans le cas où le régime (n*) de consigne de l'entraînement (6) électrique est réduit sur la base de l'écart du délestage du réseau (1) d'alimentation électrique.

8. Procédé suivant l'une des revendications 1 à 6, **caractérisé en ce que**, dans le cas où l'on réduit le régime (n*) de consigne de l'entraînement (6) électrique sur la base de l'écart du délestage du réseau (1) d'alimentation électrique, l'entraînement (6) électrique injecte de l'énergie électrique dans le réseau (1) d'alimentation ou en retire du réseau (1) d'alimentation.

9. Dispositif technique,
- dans lequel le dispositif technique a au moins un entraînement (6) électrique alimenté à partir d'un réseau (1) d'alimentation électrique,
- dans lequel le dispositif technique a un dispositif (13) de commande,
- dans lequel le dispositif (13) de commande comprend un régleur (9) de régime au moyen duquel l'entraînement (6) électrique est régulé à un régime (n*) de consigne,
- dans lequel le dispositif technique a une charge (10) sur laquelle l'entraînement (6) électrique agit, de manière à retirer de l'énergie mécanique de l'entraînement (6) électrique, en raison de la charge (10), ou à lui en apporter,
- dans lequel la charge (10) effectue une fonction utile, au moyen de l'énergie mécanique retirée de l'entraînement (6) électrique ou apportée,
**caractérisé en ce que**
le dispositif (13) de commande est constitué pour contrôler, pendant le retrait ou l'apport de l'énergie mécanique de l'entraînement (6) électrique et la relation qui s'en accompagne de la fonction utile de la charge (10), un paramètre (f) du réseau (1) d'alimentation électrique, qui, en tant que tel ou par sa dérivée en fonction du temps, est caractéristique d'un délestage du réseau (1) d'alimentation électrique et le régime (n*) de consigne de l'entraînement (6) électrique est suivi, suivant une prescription de détermination, en fonction d'un écart du délestage du réseau (1) d'alimentation électrique, de manière à stabiliser le délestage du réseau (1) d'alimentation électrique et **en ce que** le dispositif (13) de commande est constitué de manière à suivre le régime (n*) de consigne seulement entre une limite (nmin) inférieure de régime, qui est plus grande que zéro, et une limite (nmax) supérieure de régime.

10. Dispositif technique suivant la revendication 9, **caractérisé en ce que** le dispositif (13) de commande est constitué de manière à déterminer la limite (nmax) supérieure de régime et/ou la limite (nmin) inférieure de régime, en fonction d'un état (Z) de fonctionnement du dispositif technique.

11. Dispositif technique suivant la revendication 9 ou 10, **caractérisé en ce que** le réseau (1) d'alimentation électrique est un réseau à tension alternative et **en ce que** le paramètre (f) contrôlé du réseau (1) d'alimentation électrique est une fréquence (f) fondamentale du réseau (1) d'alimentation.

12. Dispositif technique suivant la revendication 9 à 11, **caractérisé en ce que** le dispositif (13) de commande est constitué de manière à utiliser l'écart du délestage du réseau (1) d'alimentation électrique comme écart à un délestage de consigne ou comme écart à une valeur instantanée du délestage réel.

13. Dispositif technique suivant l'une des revendications 9 à 12, **caractérisé en ce que** le dispositif (13) de commande est constitué de manière à déterminer dynamiquement la prescription de détermination.

14. Dispositif technique suivant l'une des revendications 9 à 13, **caractérisé en ce que** la charge (10), entraînée par l'entraînement (6) électrique, est constituée sous la forme d'une pompe, d'un ventilateur, d'une broche porte-outil, d'une broche porte-pièce ou d'une bande convoyeuse.

15. Dispositif technique suivant l'une des revendications 9 à 14, **caractérisé en ce que** l'entraînement (6) électrique retire ou apporte de l'énergie électrique au réseau (1) d'alimentation électrique, également dans le cas où le régime (n*) de consigne de l'entraînement (6) électrique est réduit sur la base de l'écart du délestage du réseau (1) d'alimentation électrique.

16. Dispositif technique suivant l'une des revendications 9 à 14, **caractérisé en ce que**, dans le cas où l'on réduit le régime (n*) de consigne de l'entraînement (6) électrique sur la base de l'écart du délestage du réseau (1) d'alimentation électrique, l'entraînement (6) électrique injecte de l'énergie électrique dans le réseau (1) d'alimentation ou en retire du réseau (1) d'alimentation.
